# EUROPÄISCHE PATENTSCHRIFT

(11) **EP 1 890 801 B1**
(45) Veröffentlichungstag und Bekanntmachung des Hinweises auf die Patenterteilung: **08.06.2011**
(21) Anmeldenummer: 06753420.6
(22) Anmeldetag: 26.04.2006
(51) Int. Cl.: B01J 19/00

(54) **Schrittweise herstellung von diacetonacrylamid**
Stepwise production of diacetone acrylamide
Production progressive de diacétoneacrylamide

(30) Priorität: 23.05.2005 AT 8732005
(43) Veröffentlichungstag der Anmeldung: 27.02.2008
(73) Patentinhaber: DSM Fine Chemicals Austria Nfg GmbH & Co KG, 4021 Linz (AT)
(72) Erfinder: PÖCHLAUER, Peter, A-4040 Linz (AT); KOTTHAUS, Martina, A-4020 Linz (AT); VORBACH, Martin, A-4020 Linz (AT); DEAK, Martin, A-6160 MA Geleen (NL); ZICH, Thomas, A-4020 Linz (AT); MARR, Rolf, A-8042 Graz (AT)
(74) Vertreter: Habets, Winand
(86) Internationale Anmeldenummer: PCT/EP2006/003859
(87) Internationale Veröffentlichungsnummer: WO 2006/125502

(56) Entgegenhaltungen:
- EP-A- 0 903 174
- EP-A- 1 123 734
- WO-A-01/83466
- DE-A1- 10 321 472
- DE-A1- 19 935 691
- DE-A1- 19 946 367
- DE-B3-102004 038 555
- US-A1- 2004 013 587

## Beschreibung

Reaktionen, die unter Beteiligung von Carbokationen ablaufen, wie etwa Ritterreaktionen, elektrophile Additionen an Alkenen oder Friedel-Crafts-Alkylierungen, verlaufen in der Regel exotherm und zumeist wenig selektiv, wobei die Geschwindigkeit der Reaktion hoch ist. Bei Verwendung von starken Säuren bei diesen Reaktionen kommt es zudem zu Korrosionsproblemen. Aus diesen Gründen treten bei der großtechnischen Umsetzung solcher Reaktionen eine Reihe von Nachteilen auf:
Um die Entwicklung der Reaktionswärme kontrollieren zu können, werden diese Reaktionen im Normalfall bei niedrigeren Temperaturen durchgeführt, als chemisch nötig bzw. sinnvoll wäre.
Zudem wird versucht, um die Reaktion zu kontrollieren, eine starke Rückvermischung zu gewährleisten, wodurch sich aber bereits gebildetes Produkt wieder zersetzen kann.
Die Reaktion wird im Produktionsmaßstab langsamer durchgeführt, als es aufgrund der Reaktionsgeschwindigkeit möglich wäre, um die Reaktion kontrolliert ablaufen zu lassen.
Die Ausbeuten sind meist zum Teil durch Bildung von Nebenprodukten zum anderen Teil durch einen nicht vollständigen Umsatz nur mäßig.
Letztendlich besteht zudem aufgrund der großen Menge an sehr reaktiven Edukten sowie Zwischenprodukten immer ein hohes Gefährdungspotential.

Zur Vermeidung von sicherheitstechnischen Problemen bei stark exothermen Reaktionen und zur Erzielung höherer Ausbeuten wird in der Literatur vorgeschlagen, diese Reaktionen in einem Mikroreaktor durchzuführen.
So beschreibt etwa WO 01/23328 die Durchführung von Friedel-Crafts-Alkylierungen organischer Verbindungen in einem Mikroreaktor, bestehend aus einem Mischelement und gegebenenfalls einer Verweilstrecke.
Aus EP 1 500 649 ist bekannt, In-Situ-Quench-Reaktionen, wie etwa die Umsetzung von Arylbromiden mit Butyllithium zu Aryllithium-Verbindungen mit nachfolgender Umsetzung mit einem Elektrophil, in einem Mikroreaktor mit gegebenenfalls angeschlossener Verweilzeit-Einheit durchzuführen.
Auch für andere Verfahren ist die Verwendung von Mikroreaktoren mit gegebenenfalls nachfolgender Verweilstrecke bekannt. Beispiele dafür sind die Herstellung von Dihydropyronen (WO 02/068403), die Kupplung von organischen Verbindungen (WO 02/00577), die Übertragung von Alkyliden-Gruppen auf organische Verbindungen (WO 02/00576), die säurekatalysierte homogene Spaltung von Cumolhydroperoxid (WO 01/30732),u.s.w.

Bei diesen Verfahren wird die gesamte Reaktion im Mikroreaktor durchgeführt, sodass im Regelfall nur sehr schnelle Reaktionen dafür geeignet sind. Des weiteren werden durch obige Verfahren deutlich geringere Ausbeuten erzielt, als theoretisch möglich wären. Auch bezüglich Durchsatz und Selektivität sind die bisher beschriebenen Verfahren, nicht zufriedenstellend.

Aufgabe der vorliegenden Erfindung war es, ein Verfahren zu finden, das die Durchführung von Reaktionen unter Beteiligung von Carbokationen in gegenüber dem Stand der Technik erhöhtem Durchsatz, erhöhter Ausbeute und Selektivität ermöglicht.

Unerwarteterweise konnte diese Aufgabe dadurch gelöst werden, dass die Reaktion in mehrere Schritte aufgeteilt wird, wobei die am stärksten exotherme Phase der Reaktion bei höchster Temperatur und kürzester Verweilzeit und die darauffolgenden, weniger exothermen Phasen bei gegebenenfalls niedrigeren Temperaturen und langeren Verweilzeiten durchgeführt werden.

Gegenstand der vorliegende erfindung ist demnach ein verbessertes Verfahren zur Herstellung von Diacetonacrylamid durch die Reaktion von Acrylnitril mit Diacetonalkohol, Aceton oder Mesityloxid in Gegenwart von Schwefelsäure und anschliessender Hydrolyse, dadurch gekennzeichnet, dass die am stärksten exotherme Anfangsphase der Reaktion bei einer Temperatur von 70 bis 110°C und einer Verweilzeit von 5 bis 20 Sekunden in einem Mikroreaktor und die folgenden weniger exothermen Phasen in zwei bis mehreren Verweilzeiteinheiten bei längerer Verweilzeit durchgeführt werden; wo die Verweilzeit in der dem Mikroreaktor nachfolgenden ersten Verweilzeiteinheit bei 1 bis 20 Minuten liegt und die Reaktionstemperatur von 60 bis 100°C ist, und gleich hoch wie im Mikroreaktor oder um 5 bis 30°C tiefer ist; und wo die Verweilzeit in der zweiten Verweilzeiteinheit 1 bis 10 Stunden beträgt und die Reaktionstemperatur am niedrigsten ist und bei 30 bis 70°C liegt.

Die Reaktionen werden erfindungsgemäss in mehreren Phasen durchgeführt.
Die erste Phase ist die am stärksten exotherme Anfangsphase.
Diese Phase wird bei hoher Temperatur und kurzer Verweilzeit in einem Mikroreaktor durchgeführt.
Als Mikroreaktoren eigenen sich dabei alle gängigen Mikroreaktoren, wie sie aus der Literatur, beispielsweise aus DE 39 26 466 C2, US 5,534,328, DE 10040 100,
WO 96/30113, EP 0 688 242, EP 1 031 375, sowie Veröffentlichungen der Fa. Mikrotechnik Mainz GmbH, Deutschland oder aus "Microreactors: Wolfgang Ehrfeld, Volker Hessel, Holger Lowe; Wiley-VHC; ISBN 3-527-29590-9; Kapitel 3 Micromixers" bekannt sind, oder auch kommerziell erhältliche Mikroreaktoren, beispielsweise von den Firmen Institut für Mikrotechnik, Mainz GmbH, Cellular Process Chemistry GmbH oder Mikroglass AG.

Bevorzugt eingesetzte Mikroreaktoren enthalten ein Mischmodul und ein Wärmetauschmodul.
Die verwendeten Mischmodule sind bevorzugt als Statikmischer ausgeführt, die auf unterschiedlichen Funktionsprinzipien basieren. Dies können beispielsweise T- TypMischer, Mikrojetreaktoren, Teilstrominjektionsmischer, Y- oder V-Typ-Mischer. Interdigitalmischer, Rechteckmischer, Schlitzmischer, Dreieck-Multilaminationsmischer, Raupenmischer, Zyklonmikromischer oder Kombinationen davon sein.
Bevorzugt werden bei dem erfindungsgemässen Verfahren Zyklonmikromischer oder T- Typmischer eingesetzt.

Das Mischmodul wird mit einem Wärmetauschmodul, das ein bis mehrere Mikrowärmetauscher enthält, kombiniert.

Geeignete Mikrowärmetauscher sind beispielsweise mikrotechnische Kreuzstromwärmetauscher, Kreuzstromwärmetauscher mit Kreuzvermischung, gestapelte Gegenstromwärmetauscher, u.s.w..
Bevorzugt werden Kreuzstromwärmetauscher verwendet.

Gegebenenfalls weisen die eingesetzten Mikroreaktoren einen thermostatisierbaren Mischpunkt auf.

Erfindungsgermäss werden die entsprechenden Reaktionsedukte in dem Mikroreaktor vermischt, wobei die Verweilzeit des Reaktionsgemisches im Mikroreaktor in dieser Phase kurz ist.
Die Reaktionstemperatur ist in dieser Phase am höchsten.
Die Verweilzeit im Mikroreaktor 5 bis 20 sec und die Reaktionstemperatur liegt bei 70 bis 110°C, bevorzugt bei 75 bis 100°C.

Anschliessend an die erste Phase der Reaktion wird das Reaktionsgemiseh in eine erste Verweilzeiteinheit überführt, in der das Reaktionsgemiseh in einer nunmehr weniger exothermen Phase nachreagiert, wodurch die Ausbeuten an dem gewünschten Endprodukt erhöht werden.
Geeignete Verweilzeiteinheiten sind beispielsweise aus EP 1 157 738 oder
EP 1 188 476 bekannt. Die Verweilzeiteinheit kann jedoch auch eine einfache Verweilzeitstrecke sein, wie etwa eine Kappillare, ein Wärmetauscher, wie etwa ein Spiralwärmetauscher, ein Plattenwärmetauscher oder ein gegebenenfalls thermostatisierbarer Schlaufenreaktor, sowie ein einfacher Rührkessel oder eine Rührkesselkaskade sein. Bevorzugt wird ein Wärmetauscher, ein Rührkessel, eine Rührkesselkaskade oder ein thermostatisierbarer Schlaufenreaktor eingesetzt.

Die Reaktionstemperatur in der Verweilzeiteinheit bei 60 bis 100°C und die Verweilzeit bei 1-20 Minuten.

Im Anschluss an diese erste Verweilzeiteinheit folgt noch eine und gegebenenfalls weitere Verweilzeiteinheiten.
Bevorzugt folgt nur eine weitere Verweilzeiteinheit. Besonders bevorzugt ist dies ein einfacher Rührkessel oder eine Rührkesselkaskade.
In dieser zweiten Verweilzeiteinheit erfolgt sodann das abschtieuende Nachreagieren, wodurch es zu einer abermaligen Ausbeuteerhöhung kommt.
Die Verweilzeit in dieser Einheit ist hier am längsten und liegt bei 1 bis 10 Stunden. Die Reaktionstemperatur in dieser Einheit ist hingegen am niedrigsten und liegt bei 30 bis 70°C.

Durch diese gestaffelte Temperaturführung und die gestaffelten Verweilzeiten ist es insbesondere bei der Herstellung von Diacetonacrylamid möglich, die Ausbeute, die bei konventioneller Fahrweise bei ca. 61 % (Rohausbeute) liegt, deutlich auf bis zu über 78% (Rohausbeute) zu erhöhen.

Neben der durch die erfindungsgemässe Reaktionsführung höheren erzielbaren Ausbeute, verläuft die Reaktion schneller, selektiver und man vermeidet dabei den Aufbau eines Potentials energiereicher Edukte oder Zwischenverbindungen.

### Beispiel 1:

### Verwendung eines Spiralwärmetauschers für die erste Verweilzeiteinheit:

Eine Reaktionslösung mit einem stöchiometrischen molaren Verhältnis von Acrylnitril(AN):Diacetonalkohol(DiAOH):H₂SO₄ = 1,0:1,0:2,4 verweilte 12 s bei 90°C im Mikroreaktor (bestehend aus einem Mischmodul aus Hastelloy und einem Wärmetauschmodul), 100 s bei 90°C im Spiralwärmetauscher und zwei Stunden bei 50°C im kontinuierlichen Rührkessel.
Die Gesamtausbeute an Diacetonacrylamid betrug 78% bezogen auf ACN, wobei in den ersten 12 s 74% und in den folgenden 100 s 21% und in den restlichen 2 h 5% des Endumsatzes entstanden.

### Beispiele 2-6:

Durchführung erfolgte analog Beispiel 1. Eingesetzte Edukte, Verweilzeiten, Temperaturen und Ausbeuten sind aus Tabelle 1 ersichtlich:

**Tabelle 1**

| AN | DiAOH | H₂SO₄ | Mikroreaktor | Spiralwärmetauscher | Rührkessel | Ausbeute |
|---|---|---|---|---|---|---|
| 1,0 | 1,0 | 2,4 | 12 s/90 °C | 100 s/90 °C | 2 h/50 °C | 78% |
| 1,0 | 1,0 | 2,2 | 4 s/95 °C | 108 s/75 °C | 2 h/55 °C | 78% |
| 1,0 | 1,0 | 2,2 | 12 s/95 °C | 100 s/65 °C | 3 h/50 °C | 76% |
| | | | | | | |

| AN | Aceton | H₂SO₄ | Mikroreaktor | Spiralwärmetauscher | Rührkessel | Ausbeute |
|---|---|---|---|---|---|---|
| 1,0 | 2,3 | 2,53 | 12 s/80 °C | 450 s/80 °C | 4 h/50 °C | 58% |

### Beispiel 7:

Die Reaktion führte mit einem stöchiometrischen Verhältnis von AN:DiaOH:H₂SO₄=1,0:1,0:2,2 und einer Verweilzeitverteilung bei 90°C für 12 s im Mikroreaktor, bei 65°C für 960 s im ersten kontinuierlichen Rührkessel und bei 55°C für 10800 s im zweiten kontinuierlichen Rührkessel zu einer Endausbeute von 73,5 %.

### Beispiel 8 - 10:

Durchführung erfolgte analog Beispiel 7. Eingesetzte Edukte, Verweilzeiten, Temperaturen und Ausbeuten sind aus Tabelle 2 ersichtlich:

| AN | DiAOH | H₂SO₄ | Mikroreaktor | 1. kontinuierlicher Rührkessel | 2. kontinuierlicher Rührkessel | Ausbeute |
|---|---|---|---|---|---|---|
| 1,0 | 1,0 | 2,2 | 12 s/90 °C | 960 s/70 °C | 3 h/55 °C | 70,4% |
| 1,0 | 1,0 | 2,2 | 12 s/90 °C | 960 s/65 °C | 3 h/55 °C | 73,5% |
| 1,0 | 1,0 | 2,2 | 12 s/85 °C | 960 s/65 °C | 3 h/55 °C | 72,1% |

## Patentansprüche

1. Verfahren zur Herstellung von Diacetonacrylamid durch die Reaktion von Acrylnitril mit Diacetonalkohol, Aceton oder Mesityloxid in Gegenwart von Schwefelsäure und anschliessender Hydrolyse, **dadurch gekennzeichnet, dass** die am stärksten exotherme Anfangsphase der Reaktion bei einer Temperatur von 70 bis 110°C und einer Verweilzeit von 5 bis 20 Sekunden in einem Mikroreaktor und die folgenden weniger exothermen Phasen in zwei bis mehreren Verweilzeiteinheiten bei längerer Verweilzeit durchgeführt werden; wo die Verweilzeit in der dem Mikroreaktor nachfolgenden ersten Verweilzeiteinheit bei 1 bis 20 Minuten liegt und die Reaktionstemperatur von 60 bis 100°C ist, und gleich hoch wie im Mikroreaktor oder um 5 bis 30°C tiefer ist; und
wo die Verweilzeit in der zweiten Verweilzeiteinheit 1 bis 10 Stunden beträgt und die Reaktionstemperatur am niedrigsten ist und bei 30 bis 70°C liegt.

2. Verfahren nach Anspruch 1, **dadurch gekennzeichnet, dass** fur die Anfangsphase Mikroreaktoren eingesetzt werden, die ein Mischmodul aus der Gruppe der T-Typ-Mischer, Mikrojetreaktoren, Teilstrominjektionsmischer, Y-oder V-Typ-Mischer, Interdigitalmischer, Rechteckmischer, Schlitzmischer, DreieckMultilaminationsmischer, Raupenmischer, Zyklonmikromischer oder Kombinationen davon, und ein Wärmetauschmodul, das ein bis mehrere Mikrowärmetauscher aus der Gruppe der mikrotechnischen Kreuzstromwärmetauscher, Kreuzstromwärmetauscher mit Kreuzvermischung oder gestapelten Gegenstromwärmetauscher aufweisen.

3. Verfahren nach einem der Ansprüche 1 oder 2, **dadurch gekennzeichnet, dass** anschliessend an den Mikroreaktor eine erste Verweilzeiteinheit, bestehend aus einer Kapillare, einem Wärmetauscher, einem gegebenenfalls thermostatisierbaren Schlaufenreaktor, einem Rührkessel oder einer Rührkesselkaskade, folgt.

4. Verfahren nach einem der Ansprüche 1 bis 3, **dadurch gekennzeichnet, dass** als zweite Verweilzeiteinheit ein Rührkessel oder eine Rührkesselkaskade verwendet wird.

## Claims

1. Process for producing diacetoneacrylamide by the reaction of acrylonitrile with diacetone alcohol, acetone, or mesityl oxide in the presence of sulfuric acid, and then hydrolysis, **characterized in that** the most strongly exothermic initial phase of the reaction is carried out at a temperature of from 70 to 110°C with a residence time of from 5 to 20 seconds in a microreactor and the subsequent less exothermic phases are carried out in two or more residence time units with longer residence time;
where the residence time in the first residence time unit following the microreactor is from 1 to 20 minutes and the reaction temperature is from 60 to 100°C, and is the same as in the microreactor or is lower by from 5 to 30°C; and
where the residence time in the second residence time unit is from 1 to 10 hours and the reaction temperature is the lowest and is from 30 to 70°C.

2. Process according to Claim 1, **characterized in that**, for the initial phase, microreactors are used which have a mixing module from the group of the T-type mixers, microjet reactors, substream injection mixers, Y- or V-type mixers, interdigital mixers, rectangular mixers, slot mixers, triangular multilamination mixers, caterpillar mixers, cyclone micromixers, or combinations of these, and a heat-exchange module which has from one to a plurality of microheat-exchangers from the group of the micro-crossflow heat-exchangers, crossflow heat-exchangers with crossmixing, or stacked countercurrent heat-exchangers.

3. Process according to Claim 1 or 2, **characterized in that** there is, following the microreactor, a first residence time unit, composed of a capillary, of a heat-exchanger, of an optionally thermostatable loop reactor, of a stirred tank, or of a stirred-tank cascade.

4. Process according to any of Claims 1 to 3, **characterized in that** a stirred-tank or a stirred-tank cascade is used as second residence time unit.

## Revendications

1. Procédé de fabrication de diacétoneacrylamide par réaction d'acrylonitrile avec du diacétone alcool, de l'acétone ou de l'oxyde de mésityle en présence d'acide sulfurique, et hydrolyse ultérieure, **caractérisé en ce que** la phase de démarrage la plus exotherme de la réaction est réalisée à une température de 70 à 110 °C et avec un temps de séjour de 5 à 20 secondes dans un microréacteur et les phases moins exothermes suivantes sont réalisées dans deux unités à temps de séjour ou plus avec un temps de séjour plus long ; le temps de séjour dans la première unité à temps de séjour après le microréacteur étant de 1 à 20 minutes et la température de réaction étant de 60 à 100 °C, et étant aussi élevée que dans le microréacteur ou 5 à 30 °C plus basse ; et
le temps de séjour dans la deuxième unité à temps de séjour étant de 1 à 10 heures et la température de réaction étant la plus basse et se situant de 30 à 70 °C.

2. Procédé selon la revendication 1, **caractérisé en ce que** des microréacteurs qui comprennent un module de mélange choisi dans le groupe constitué par les mélangeurs de type T, les réacteurs à microjet, les mélangeurs à injection de courant partiel, les mélangeurs de type Y ou V, les mélangeurs interdigités, les mélangeurs rectangulaires, les mélangeurs à fente, les mélangeurs triangulaires à multilamination, les mélangeurs à chenilles, les micromélangeurs à cyclone ou leurs combinaisons, et un module d'échange de chaleur, qui comprend un ou plusieurs microéchangeurs de chaleur choisis dans le groupe constitué par les échangeurs de chaleur microtechniques à courants croisés, les échangeurs de chaleurs à courants croisés avec mélange croisé ou les échangeurs de chaleur à contre-courant superposés, sont utilisés pour la phase de démarrage.

3. Procédé selon l'une quelconque des revendications 1 ou 2, **caractérisé en ce qu'**une première unité à temps de séjour constituée d'un capillaire, d'un échangeur de chaleur, d'un réacteur à boucle éventuellement thermostatable, d'une cuve agitée ou d'une cascade de cuves agitées suit le microréacteur.

4. Procédé selon l'une quelconque des revendications 1 à 3, **caractérisé en ce qu'**une cuve agitée ou une cascade de cuves agitées est utilisée en tant que deuxième unité à temps de séjour.
